# EUROPÄISCHE PATENTSCHRIFT

(11) **EP 2 466 169 B1**
(45) Veröffentlichungstag und Bekanntmachung des Hinweises auf die Patenterteilung: **25.06.2014**
(21) Anmeldenummer: 11175007.1
(22) Anmeldetag: 22.07.2011
(51) Int. Cl.: F16H 3/72, F16H 47/04, B60K 17/28, F16H 57/033

(54) **Einrichtung für ein Getriebe**
Device for a gearbox
Dispositif pour une boîte de vitesse

(30) Priorität: 16.12.2010 EP 10195367
(43) Veröffentlichungstag der Anmeldung: 20.06.2012
(73) Patentinhaber: VDS Getriebe GmbH, 4493 Wolfern (AT)
(72) Erfinder: Aitzetmüller, Heinz, 4817 St. Konrad (AT); Stöckl, Dieter, 4400 St. Ulrich (AT); Hörmann, Gerhard, 4723 Natternbach (AT)
(74) Vertreter: Staudt, Armin Walter

(56) Entgegenhaltungen:
- EP-A2- 1 329 354
- DE-C1- 4 311 084
- US-A- 2 982 153
- US-A1- 2006 148 607

## Beschreibung

Die vorliegende Erfindung betrifft eine Einrichtung für ein Getriebe, umfassend eine Eingangswelle, eine erste Abtriebswelle, eine zweite Abtriebswelle, sowie einen Summierplanetensatz und eine Variatoreinheit oder an deren Stelle eine Hydropumpe, und diese untereinander sowie mit der Eingangswelle und den Abtriebswellen in Wirkverbindung bringenden Bauteilen zur stufenlosen Beeinflussung der Drehzahl einer der Abtriebswellen bei konstanter Drehzahl der Eingangswelle, wobei die Einrichtung als vorgefertigtes Modul zwischen einer Verbrennungskraftmaschine, einem herkömmlichen Getriebe beliebiger Bauart eines Fahrzeugantriebes und einem Nebenabtrieb derart einbaubar ist, dass das Modul über die Eingangswelle mit der Verbrennungskraftmaschine, über die erste Abtriebswelle mit dem Getriebe und über die zweite Abtriebswelle mit dem Nebenabtrieb verbindbar ist, wobei die Einrichtung Mittel zur Aufteilung der Antriebsleistung der Verbrennungskraftmaschine auf den Fahrzeugantrieb und den Nebenabtrieb aufweist und wobei die Drehzahl des Fahrantriebs oder die Drehzahl des Nebenabtriebs durch die Einrichtung stufenlos einstellbar ist.

Insbesondere geht es um ein Getriebe für den Einbau zwischen einer Verbrennungskraftmaschine und einem vorhandenen Getriebe beliebiger Bauart, zur stufenlosen Beeinflussung der Abtriebsdrehzahl bei konstanter Eingangsdrehzahl, welches auch zur Nachrüstung bestehender Kraftfahrzeuge geeignet ist.

### Stand der Technik:

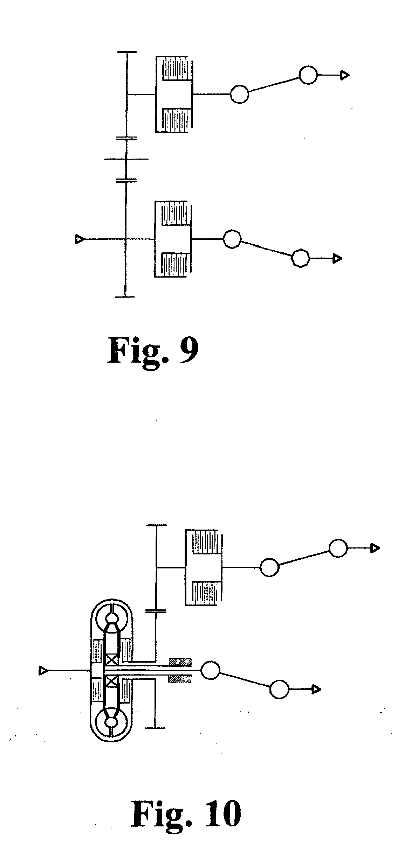

Aus dem Stand der Technik sind mehrere Systeme zur Aufteilung der Antriebsleistung bekannt. Sie werden üblicherweise zwischen dem Verbrennungsmotor und dem Getriebe zum Fahrzeugantrieb eingebaut und leiten einen Teil der Motorleistung zu einem oder mehreren Nebenverbrauchern, wie beispielsweise Pumpen oder anderen Aggregaten ab. So zeigt das Power Divider System nach Cushman, das in **Figur 9** schematisch und vereinfacht wiedergegeben ist, eine mit einem Verbrennungsmotor verbundene Eingangswelle, dessen Drehimpuls direkt oder über eine Stirnradstufe zu zwei Kupplungen abgeleitet wird, von denen eine zur Antriebswelle des Fahrzeuges und die zweite zur Antriebswelle eines Aggregates, beispielsweise einer Pumpe, führt.

Wie - ohne weitere Erläuterung leicht erkennbar - ist dieses Prinzip nicht geeignet, um die Fahrzeuggeschwindigkeit bei hoher Leistung zur Nebenabtriebswelle unabhängig von der Motordrehzahl in definierten, insbesondere sehr geringen Geschwindigkeitsbereichen zu betreiben oder stufenlos einzustellen. Die Abtriebswellendrehzahl zum Fahrzeuggetriebe steht beim System nach Cushman immer in einem definierten Verhältnis zur Antriebsdrehzahl. Soll das Fahrzeug bei sehr geringer Geschwindigkeit und hoher Motordrehzahl betrieben werden, so kann dies nur geschehen, indem die Kupplung zum Fahrzeuggetriebe schleifend betrieben oder bei Vorhandensein eines Drehmomentwandlers das Fahrzeug über die Betriebsbremse gebremst wird. Alternativ kann die Drehzahl des Verbrennungsmotors reduziert werden, was sich auch auf die Drehzahl der Abtriebswelle zum Nebenaggregat, beispielsweise einer Löschwasserpumpe auswirkt.

Ein anderes bekanntes System zur Aufteilung der Antriebsleistung, gebaut von der Firma Twin Disc, ist in **Figur 12** schematisch und vereinfacht wiedergegeben. Auch bei diesem System ist man wieder mit dem oben geschilderten Problem konfrontiert, dass die Aggregatleistung in direktem Verhältnis zur Motordrehzahl steht, welche wiederum in Zusammenhang steht mit der Fahrzeuggeschwindigkeit. Demnach ist es auch hier nicht möglich, dass beispielsweise die Motordrehzahl hoch ist, damit die Löschpumpe mit hoher Ausstoßleistung betrieben werden kann und gleichzeitig das Fahrzeug über einen längeren Zeitraum im Schritttempo bewegt wird.

Die in den beiden Figuren 11 und 12 dargestellten Lösungen sind in der Praxis auch bei Löschfahrzeugen zu finden. Sie sind für die temporäre Zuschaltung von Nebenabtriebswellen durchaus geeignet. Der wesentliche Nachteil liegt jedoch darin, dass die Abtriebswellendrehzahl zum nachgeschalteten Fahrzeugantrieb nur über schleifende Kupplungen beeinflusst werden kann. Dies hat jedoch zur Folge, dass ein Fahren des Fahrzeuges bei sehr langsamer Geschwindigkeit und gleichzeitig hoher Motordrehzahl unter Verwendung von nachgeschalteten automatischen Getrieben oder Synchrosplitgetrieben nur sehr eingeschränkt oder gar nicht möglich ist. Die Mindestgeschwindigkeit ist durch die erforderliche Motordrehzahl zum Antrieb der Nebenaggregate durch die Übersetzung im niedrigsten Gang und gegebenenfalls durch einen Drehmomentwandler festgelegt.

Weiters sind Stufenlosgetriebe bekannt, die das Drehmoment des Antriebsaggregates auf einen Fahrzeugantrieb und einen Nebenabtrieb der Art aufteilen, dass der Fahrzeugantrieb innerhalb eines vorgegebenen Bereiches stufenlos veränderbar ist. So offenbart die JP 2008 201303 A ein spezielles Getriebekonzept für ein Stufenlosgetriebe für Traktoren. Dieses Getriebe ist aber nicht als separates Modul integrierbar zwischen einem herkömmlichen Getriebe und einem Motor und daher insbesondere auch nicht zur Nachrüstung geeignet.

Die DE 30 41 865 A1 und die EP 1 961 994 A2 offenbaren ebenfalls hochintegrierte Stufenlosgetriebe, welche aber ebenfalls nicht als separates Modul integrierbar sind zwischen einem herkömmlichen Getriebe und einem Motor.

Aus der gattungsgemäßen EP 1 329 354 A2 ist ein Fahrzeug mit einem Antriebsmotor, einem Hauptabtrieb und einem Nebenabtrieb bekannt, bei dem zwischen Antriebsmotors und dem Haupt- beziehungsweise Nebenabtrieb ein Element zur Einstellung der Fahrgeschwindigkeit mit einer hydromechanischen Übertragungseinheit und einem Planetengetriebe angeordnet ist. Das Element weist eine Eingangswelle auf, die mit dem Haupt- und dem Nebenabtrieb in Wirkverbindung steht. Der Drehimpuls der Eingangswelle wird über eine Stirnradstufe an ein Planetenrad des Planetengetriebes übertragen.

DE 43 11 084 C1 lehrt eine Antriebseinrichtung für ein Fahrzeug, bei der zwischen einem Antriebsmotor und einem herkömmlichen Schaltgetriebe ein spezielles hydrostatisch mechanisches Vorschaltgetriebe angeordnet ist.

Ferner zeigt US 2 982 153 A einen Regelantrieb für Zugmaschinen, der ein Planetengetriebe aufweist.

### Technische Aufgabenstellung

Die vorliegende Erfindung stellt sich daher die Aufgabe, eine Einrichtung in der Form eines Moduls zur stufenlosen Anpassung der Drehzahl an der Abtriebswelle zum Fahrantriebsgetriebe zu schaffen, welches zwischen einem Verbrennungsmotor und einem beliebigen Schaltgetriebe, beispielsweise Handschaltgetriebe, Synchrosplitgetriebe oder Automatgetriebe einbaubar ist.

Ferner soll die erfindungsgemäße Einrichtung auch eine Aufteilung der Antriebsleistung einer Verbrennungskraftmaschine auf einen Fahrzeugantrieb und einen oder mehrere Nebenabtriebe mit stufenloser Anpassung der Drehzahl an der Abtriebswelle zum Fahrzeuggetriebe oder mit stufenloser Anpassung der Drehzahl an der Abtriebswelle zum Nebenabtrieb ermöglichen, die die genannten Mängel der bekannten Einrichtungen weitgehend vermeidet und einen einfachen, in seiner Herstellung kostengünstigen Aufbau besitzt und auch zum nachträglichen Einbau geeignet ist.

Mit der erfindungsgemäßen Einrichtung soll es insbesondere ermöglicht werden, bei hoher Motordrehzahl das Fahrzeug auch bei sehr geringer Geschwindigkeit zu fahren, ohne die Fahrzeuggeschwindigkeit nur über schleifende Kupplungen zu beeinflussen, oder die Drehzahl an den Nebenabtrieben unabhängig von der Motordrehzahl in definierten, insbesondere sehr geringen Fahrgeschwindigkeitsbereichen stufenlos einzustellen.

### Allgemeine Darstellung der Erfindung

Diese Aufgabe wird ausgehend von einer Einrichtung gemäß der eingangs genannten Gattung erfindungsgemäß dadurch gelöst, dass der Drehimpuls der Eingangswelle über eine Stirnradstufe an ein Hohlrad des Summierplanetensatzes und von diesem Hohlrad über Planetenräder an einen Planetenträger übertragen wird, der in Wirkverbindung mit der ersten Abtriebswelle oder der zweiten Abtriebswelle steht, dass die Drehzahl der ersten Abtriebswelle oder der zweiten Abtriebswelle über die Variatoreinheit oder die Hydropumpe, welche mit einem Sonnenrad des Summierplanetensatzes in Wirkverbindung steht, mit hydrostatisch-mechanischer oder elektrisch-mechanischer Leistungsverzweigung stufenlos und unabhängig von der Drehzahl der Eingangswelle einstellbar ist, dass die Eingangswelle über eine oder mehrere Stirnradstufen und eine lösbare Kupplung mit der zweiten Abtriebswelle verbunden ist, und dass der Nebenabtrieb bei geschlossener Kupplung aktivierbar ist.

Erfindungsgemäß ist zwischen der Eingangswelle von einem Verbrennungsmotor und der Abtriebswelle zum Fahrzeugantrieb beziehungsweise einem Nebenabtrieb ein Modul vorgesehen ist, umfassend ein Überlagerungsgetriebe und einem Variator, welches eine stufenlose Reduktion oder Erhöhung des Drehimpulses von der Eingangswelle zur Abtriebswelle ermöglicht, wobei der Drehimpuls der Eingangswelle über eine Stirnradstufe an ein Hohlrad des Überlagerungsgetriebes und von diesem Hohlrad über Planetenräder und mit diesen Planetenrädern in Wirkverbindung stehendem Sonnenrad, welches über ein Variatorsystem angetrieben wird, an einen Planetenträger übertragen wird, der in Wirkverbindung mit der Abtriebswelle beziehungsweise dem Nebenabtrieb steht.

Das erfindungsgemäße Modul ist auch geeignet zur Aufteilung der Antriebsleistung einer Verbrennungskraftmaschine auf einen Fahrzeugantrieb und einen oder mehrere Nebenabtriebe, wobei die Drehzahl des Fahrantriebes oder die Drehzahl des Nebenantriebes stufenlos einstellbar sind. Weiters kann das Modul zwischen der Verbrennungskraftmaschine und dem Nebenabtriebsgetriebe eingesetzt werden zur stufenlosen Beeinflussung der Abtriebsdrehzahl bei konstanter Eingangsdrehzahl.

Diese Einrichtung - hier auch kurz als "Modul" bezeichnet - ist beispielsweise für spezielle Einsatzfahrzeuge, wie Löschfahrzeuge, insbesondere Flughafenlöschfahrzeuge, aber auch für Straßenkehrmaschinen, Beton-Mischfahrzeuge, Schneefräsfahrzeuge und ähnliche Anwendungen geeignet, bei denen die Fahrzeuggeschwindigkeit oder die Drehzahl an den Nebenabtrieben unabhängig von der Motordrehzahl in definierten, insbesondere sehr geringen Geschwindigkeitsbereichen stufenlos einstellbar sein soll. Mit der vorliegenden Erfindung kann die Fahrzeuggeschwindigkeit und die Drehzahl an den Nebenabtrieben optimal auf die jeweils herrschenden Arbeitsbedingungen abgestimmt werden.

Das Modul ist aber- beispielsweise bei Kraftfahrzeugen ohne Nebenabtrieb - auch geeignet, um den Abtrieb gegenüber der Motordrehzahl zu reduzieren oder zu erhöhen. Wird beispielsweise der Abtrieb gegenüber der Motordrehzahl erhöht, so führt dies zu einem geringeren Moment am nachfolgenden Getriebe, wodurch eine höhere Leistung auf das nachfolgende Getriebe übertragbar wird. Dadurch wird es ermöglicht, Dieselmotoren der neueren Generation mit höheren Momenten mit herkömmlichen Getrieben zu kombinieren, welche nicht für so hohe Momente ausgelegt sind.

Die efindungsgemäße Einrichtung ist insbesondere zur Nachrüstung bestehender Kraftfahrzeuge geeignet.

### Ausführungsbeispiel

Die erfindungsgemäße Einrichtung ist in den Figuren schematisch dargestellt und wird nachfolgend anhand dieser Figuren näher beschrieben. Darin zeigt:
- **Figur 1**: eine erste Ausführungsform des erfindungsgemäßen Moduls für ein Getriebe zum Einbau zwischen einem Verbrennungsmotor und einem beliebigen Fahrzeuggetriebe,
- **Figuren 2 bis 8**: jeweils eine zu Fig. 1 alternative Ausführungsform eines erfindungsgemäßen Moduls für ein Getriebe,
- **Figur 9**: ein Getriebe aus dem Stand der Technik, und
- **Figur 10**: ein weiteres Getriebe aus dem Stand der Technik.

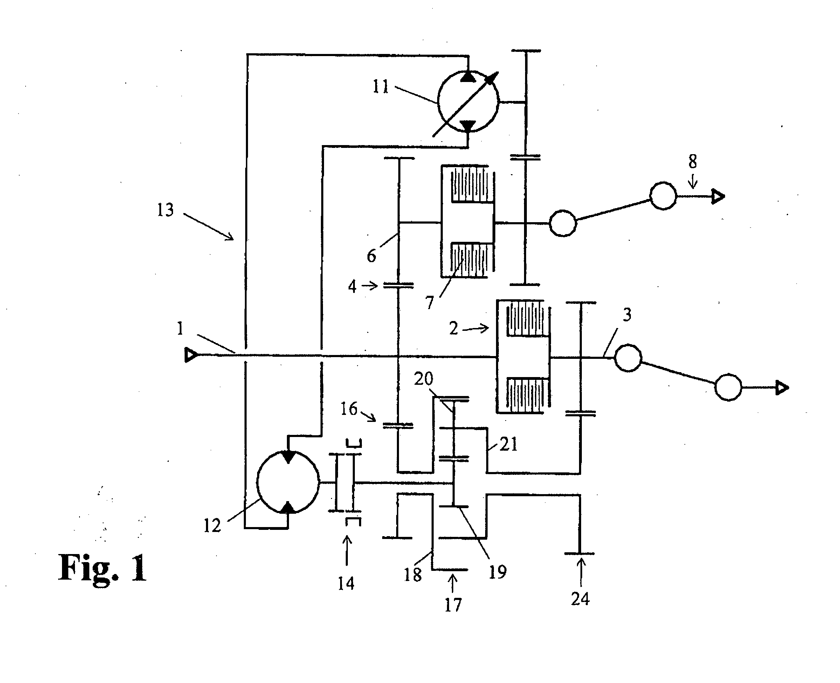

Die in den Figuren 1 bis 8 dargestellten Einrichtungen erheben keinen Anspruch auf vollständige Abbildung aller möglichen Alternativen, jede weitere alternative Ausführung ist für den Fachmann jedoch aus diesen Abbildungen heraus leicht nachvollziehbar.

Wie aus **Fig. 1** ersichtlich, weist die erfindungsgemäße Einrichtung zur Aufteilung der Antriebsleistung einer Verbrennungskraftmaschine auf einen Fahrantrieb und einen oder mehrere Nebenabtriebe eine Eingangswelle 1 und eine Abtriebswelle 3 zum Fahrzeuggetriebe auf, welche über eine Synchronisiereinrichtung 2 miteinander verbindbar sind. Im normalen Fahrbetrieb, ohne Aktivierung des Nebenabtriebs 8, ist die Synchronisiereinrichtung 2 geschlossen und das Drehmoment wird von der Getriebeeingangswelle 1 unmittelbar an die Abtriebswelle 3 übertragen.

Alternativ dazu ist die Eingangswelle 1 mit der Abtriebswelle 3 zum Fahrzeuggetriebe über ein Überlagerungsgetriebe 17 verbunden, wobei das Hohlrad 18 über eine Stirnradstufe 16 mit der Getriebeeingangswelle 1 gekoppelt ist und entsprechend der Drehzahl der Getriebeeingangswelle 1 rotiert.

Das Sonnenrad 19 des Summierplanetengetriebes wird über einen Hydromotor 12 angetrieben, welcher im geschlossenen Kreislauf mit einer Hydraulikpumpe 11 verbunden ist. Die Hydraulikpumpe 11 wird durch Zuschaltung des Nebenabtriebs 8 durch Schließen der Kupplung 7 aktiviert.

Der Abtrieb vom Summierplanetengetriebe erfolgt über den Planetenträger 21 und von dort über eine Stirnradstufe 24 zur Abtriebswelle 3. Die Drehzahl der Abtriebswelle 3 zum Fahrzeuggetriebe kann innerhalb der Drehzahl- und Leistungsgrenzen des hydrostatischen Variatorsystems 13 stufenlos an die jeweiligen Bedingungen angepasst werden.

In den Figuren 1 bis 8 sind hydrostatische Variatorsysteme 13 dargestellt. Die Ausführungen gelten aber genauso für geeignete alternative Variatorsysteme, in welchen eine kontinuierliche Veränderung der Abtriebsdrehzahl des Variatorsystems möglich ist. Darunter fallen beispielsweise alle hydrostatischen Variatoren mit einer Verstellpumpe und einem Konstantmotor oder mit einer Verstellpumpe und einem Verstellmotor, beispielsweise in der Form von Axialkolbenmaschinen oder in der Form von Flügelzelleneinheiten, aber auch elektrische Variatoren, Riemen- oder Kettenvariatoren und viele andere mehr.

Der Nebenabtrieb 8 wird bei Bedarf über eine zuschaltbare Kupplung 7 an die Getriebeeingangswelle 1 gekoppelt, wodurch im Bedarfsfall das gesamte Drehmoment der Getriebeeingangswelle 1 auf den Nebenabtrieb 8 übertragen wird.

Im normalen Fahrbetrieb des Fahrzeuges wird der Kraftfluss von der Getriebeeingangswelle 1 zur Abtriebswelle 3 und von hier zum Fahrzeuggetriebe über die Synchronisiereinrichtung 2 geschlossen. Die Verbindung 14 des Hydromotors 12 mit dem Sonnenrad 19 des Summierplanetengetriebes ist geöffnet, ebenso wie die Kupplung 7, wodurch keine Leistung an den Nebenabtrieb 8 übertragen wird. Infolge der direkten Verbindung der Getriebeeingangswelle 1 mit der Abtriebswelle 3 wird die gesamte Antriebsleistung mit minimalen Verlusten übertragen. Die Komponenten des Summierplanetengetriebes und der verbundenen Stirnradstufen rotieren ohne Last entsprechend den gewählten Übersetzungsverhältnissen.

Im kombinierten Fahrbetrieb wird zusätzlich zur geschlossenen Synchronisiereinrichtung 2 auch die Kupplung 7 geschlossen. Die Verbindung 14 bleibt offen. Die Fahrzeuggeschwindigkeit wird durch die Drehzahl des Verbrennungsmotors und die Übersetzung des eingelegten Ganges im nicht dargestellten, der Abtriebswelle 3 folgenden Getriebe bestimmt.

Soll die Fahrzeuggeschwindigkeit nun angepasst werden bei unveränderter Kraftübertragung zum Nebenabtrieb 8, so wird im Variatorsystem 13 in der Hydropumpe 11 durch eine entsprechende Steuereinrichtung die Fördermenge des Druckmediums soweit beeinflusst, dass an der Verbindung 14 Synchrondrehzahl zwischen der Abtriebswelle des Hydromotors 12 und der Welle zum Sonnenrad 19 besteht.

Nachdem die Synchrondrehzahl erreicht ist, wird mittels der Verbindung 14 das Sonnenrad 19 mit dem Hydromotor 12 verbunden und anschließend die direkte Verbindung zwischen Getriebeeingangswelle 1 und Abtriebswelle 3 durch öffnen des Synchrongetriebes 2 unterbrochen. Ab diesem Zeitpunkt erfolgt die Leistungsübertragung vom Verbrennungsmotor zum Fahrzeuggetriebe ausschließlich über das Überlagerungsgetriebe 17, wodurch die Drehzahl der Abtriebswelle 3 durch Beeinflussung der Drehzahl des Sonnenrades 19 über das Variatorsystem 13 stufenlos eingestellt werden kann.

Die Drehzahl der Abtriebswelle 3 kann durch entsprechende Anpassung der Drehzahl des Hydromotors 12 über die Einstellung der Hydropumpe 11 bei konstanter Drehzahl der Getriebeeingangswelle 1 stufenlos an die jeweiligen Einsatzbedingungen angepasst werden. Dadurch wird es möglich, das Fahrzeug auch mit Kriechgeschwindigkeit fort zu bewegen und gleichzeitig den Verbrennungsmotor mit voller Drehzahl zu betreiben, wodurch an der Abtriebswelle zum Nebenaggregat die volle Leistungswirkung ermöglicht wird.

Mit diesem System ist auch die Darstellung einer Overdrive- Funktion möglich, bei dem die Drehzahl der Abtriebswelle 3 gegenüber der Drehzahl der Getriebeeingangswelle 1 erhöht wird. Voraussetzung dafür ist aber, dass die Leistung des Verbrennungsmotors ausreichend ist und das Sonnenrad 19 mit ausreichender Drehzahl gleichgerichtet mit dem Hohlrad 18 rotiert.

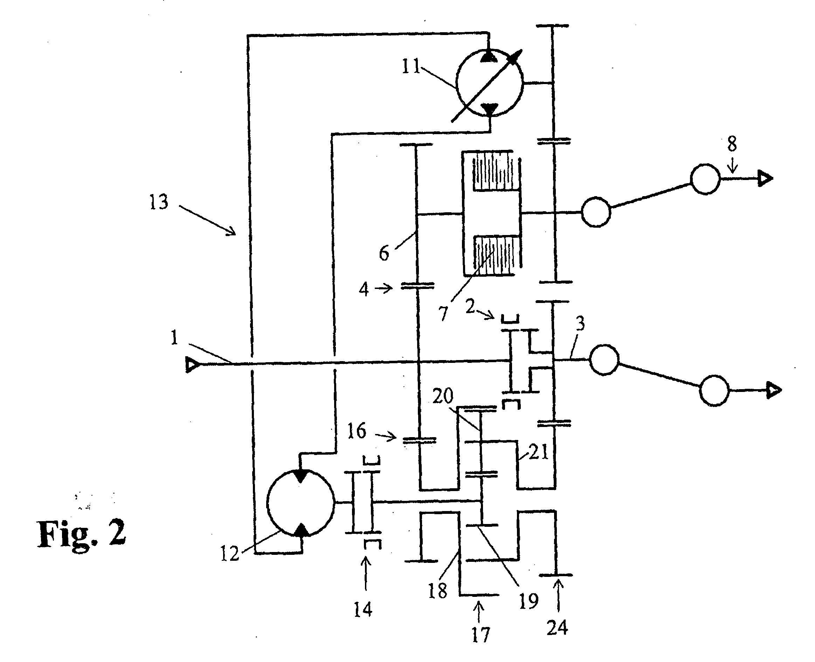

Eine alternative Ausführung ist aus **Fig. 2** ersichtlich. Der Aufbau und die Betriebsweise entsprechen im Wesentlichen dem Aufbau und der Betriebsweise der Einrichtung nach **Fig. 1**. Hier wird lediglich die Synchronisiereinrichtung 2 durch eine zu Verbindung 14 analoge Verbindung ersetzt. Diese Ausführungsform eignet sich besonders für Automatikgetriebe, die der Abtriebswelle 3 nachgeschaltet sind.

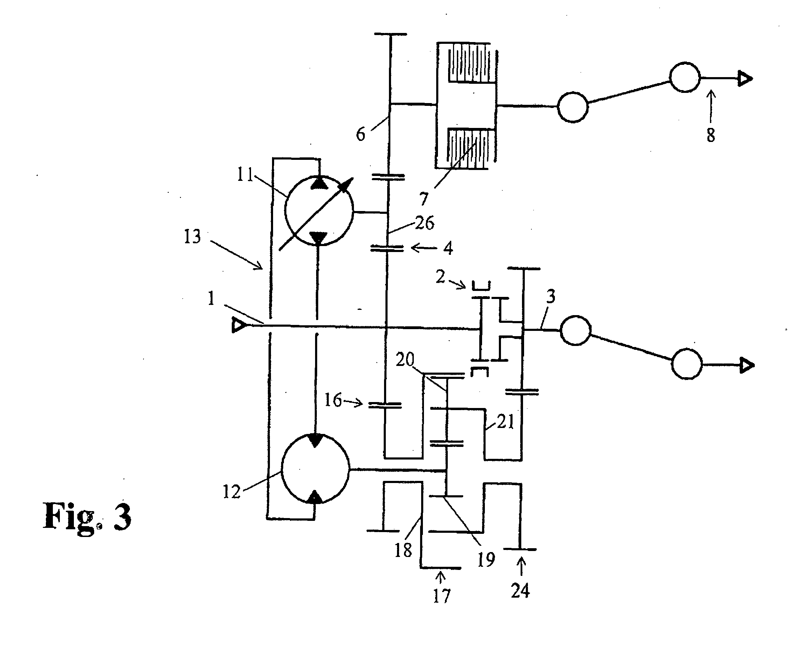

In der Ausführung der Erfindung nach **Fig. 3** besteht eine ständige Verbindung der Getriebeeingangswelle 1 zur Hydropumpe 11 und eine ständige Verbindung zwischen dem Hydromotor 12 und dem Sonnenrad 19. In der dargestellten Ausführungsform ist die Hydropumpe über ein Zwischenrad 26 angetrieben, in analoger Weise kann es an das Zahnrad 6 gekoppelt sein. Bei geschlossener Synchronisiereinrichtung 2 wird die Hydropumpe derart geregelt, dass im hydrostatischen Kreis nur sehr geringer Differenzdruck aufgebaut wird. Der Vorteil der in **Fig. 3** dargestellten Anordnung besteht darin, dass der Abtrieb zum Fahrzeugantrieb unabhängig von der Drehzahl des Antriebsmotors eingestellt werden kann, auch wenn der Nebenabtrieb nicht zugeschaltet wurde.

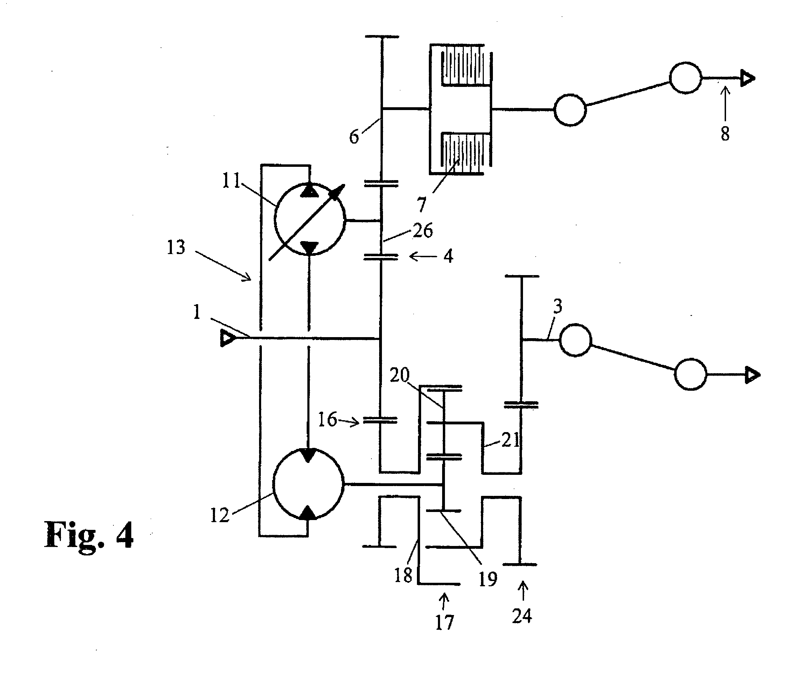

Eine alternative, kostengünstigere Ausführung zum Ansatz entsprechend der Ausführung nach **Fig. 3** ist in **Fig. 4** gezeigt. Hier wird die Verbindung zwischen dem Antriebsmotor und dem Fahrzeugantrieb immer über das Überlagerungsgetriebe 17 hergesellt. Beim Antrieb des Fahrzeuges wird demnach über den Variator 13 ständig Druck aufgebaut. Diese Alternative hat sich als besonders vorteilhaft beim Einsatz in Fahrzeugen mit hohen Betriebszeiten bei niedrigen Fahrzeuggeschwindigkeiten wie zum Beispiel in Kehrmaschinen erwiesen.

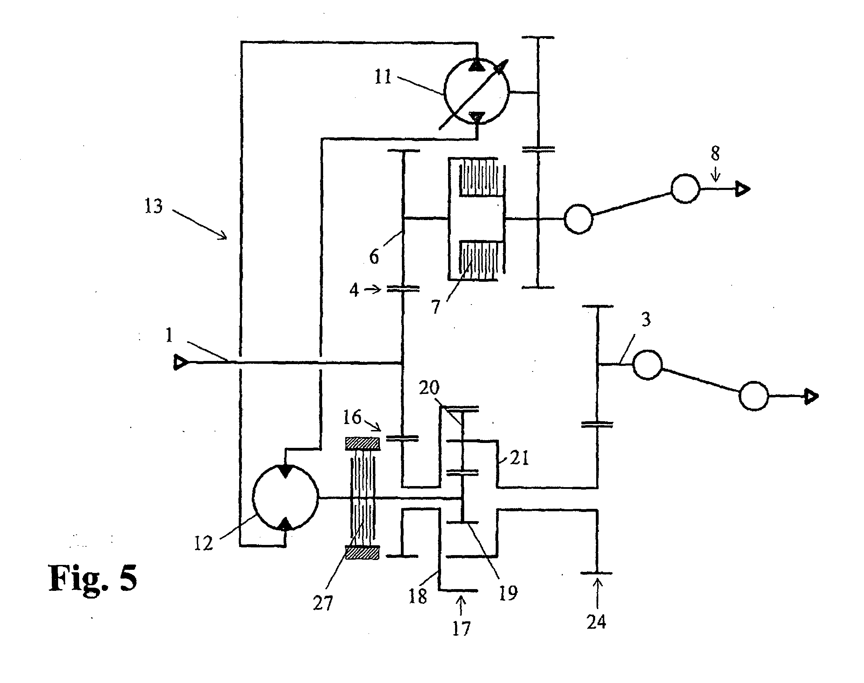

Eine weitere alternative Ausführung ist in **Fig. 5** dargestellt. Hier besteht keine direkt schaltbare Verbindung zwischen der Getriebeeingangswelle 1 und der Abtriebswelle 3. Bei deaktivem Nebenabtrieb 8 zum Nebenaggregat erfolgt der Abtrieb unbeeinflusst vom Variatorsystem 13 über das Überlagerungsgetriebe 17. Der Nebenabtrieb 8 ist erst aktiv, wenn die Kupplung 7 geschlossen wird. Sobald die Hydraulikpumpe 11 über die Kupplung 7 zugeschaltet ist, wird im hydrostatischen Kreis Druck aufgebaut und die Bremse 27 wird geöffnet. Für diese Konstruktion ist es erforderlich, das Sonnenrad 19 bei abgeschaltetem Nebenabtrieb über die Bremse 27 mit dem Getriebegehäuse zu verbinden und somit den Kraftfluss zum Fahrzeugantrieb zu schließen.

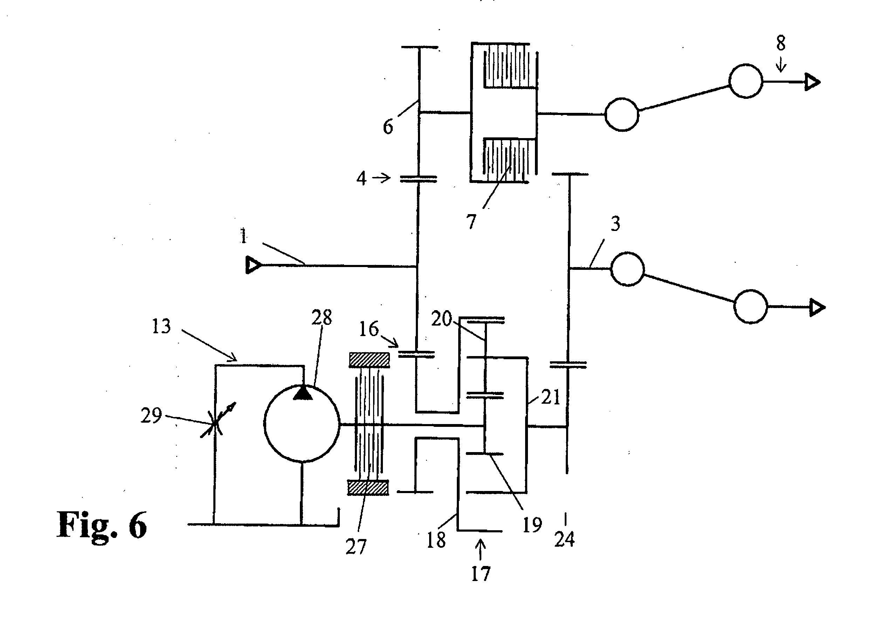

Die in **Fig. 6** dargestellte alternative Ausführungsform zeigt eine erfindungsgemäße Einrichtung, ähnlich zu jener aus den **Fig. 1 bis 5**, wobei jedoch die Variatoreinheit 13 durch eine einfache Pumpe 28 ersetzt ist, die einen Ölstrom aus einer Ölvorlage gegen eine regelbare Drossel 29 pumpt. Die Fahrzeuggeschwindigkeit wird bei offener Bremse 27 durch die Drosselregelung beeinflusst. Auch hier besteht keine direkt schaltbare Verbindung zwischen der Getriebeeingangswelle 1 und der Abtriebswelle 3. Wenn die volle Drehzahl der Getriebeeingangswelle 1 für den Fahrantrieb benötigt wird, also bei deaktivem Nebenabtrieb 8 zum Nebenaggregat, erfolgt der Impulsübertrag zur Abtriebswelle 3 direkt über das Planetensystem 17 bei geschlossener Bremse 27.

Der Nebenabtrieb 8 wird aktiviert durch Schließen der Kupplung 7. Bei Bedarf wird die Fahrzeuggeschwindigkeit reduziert, indem die Bremse 27 geöffnet wird. Die mit dem Planetengetriebe 17 in Wirkverbindung stehende Hydropumpe 28, welche gegen die Drossel 29 arbeitet, wird verwendet, um die Drehzahl der Abtriebswelle 3 zu beeinflussen. Auf diese Weise wird die Geschwindigkeit des Fahrzeugs leichter und über eine große Betriebsdauer reduzierbar im Vergleich zu einer Lamellenkupplung.

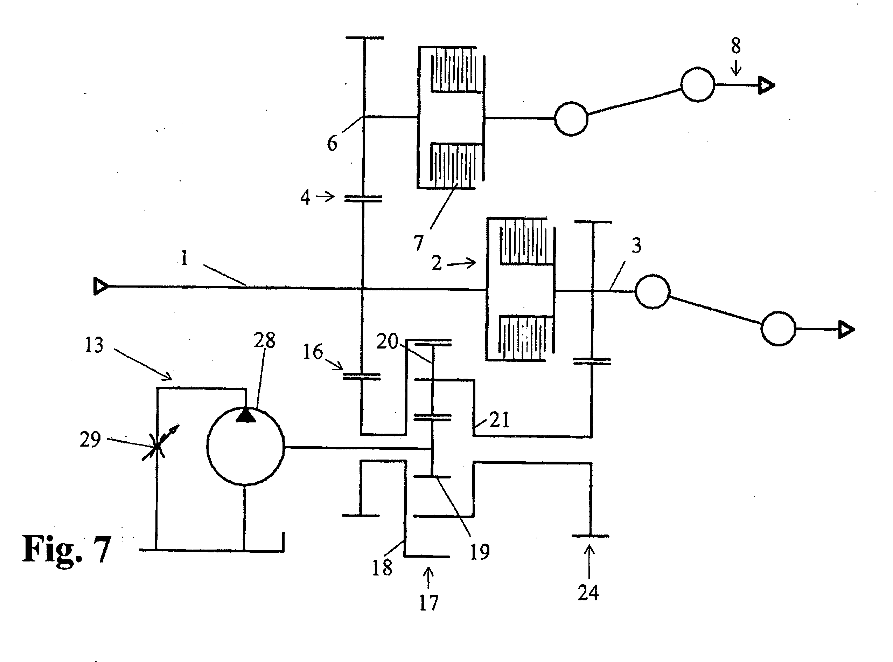

**Fig. 7** zeigt einen weiteren alternativen Aufbau der erfindungsgemäßen Einrichtung, wie er typisch für Feuerwehrautos zum Einsatz kommen kann. Bei dieser Variante wird bei normaler Fahrt die Abtriebswelle 3 zum Fahrzeugantrieb direkt über die Synchronisiereinrichtung 2 mit der Getriebeeingangswelle 1 gekoppelt. Zur Reduktion der Drehzahl der Abtriebswelle 3 wird die Synchronisiereinrichtung 2 geöffnet und mittels der Drehzahl des Sonnenrades 19 im Planetengetriebe 17 die Drehzahl der Abtriebswelle 3 eingestellt. Die Drehzahl der Hydropumpe 28 wird durch Regelung der Durchflussmenge an der Drossel 29 eingestellt. Die Übersetzungen in den Stirnradstufen 16 und 24, sowie im Summierplanetensatz 17 sind so gewählt, dass bei geschlossener Synchronisiereinrichtung 2 die Drehzahl am Sonnenrad 19 und somit an der Hydropumpe 28 nahe Null ist.

Die in den **Fig. 6** **und** **7** gezeigten Ausführungen zeichnen sich besonders durch ihre kostengünstige Konstruktion aus. Alternativ zu der dargestellten Hydropumpe 28 ist die Verwendung eines drehzahlgeregelten elektrischen Generators denkbar.

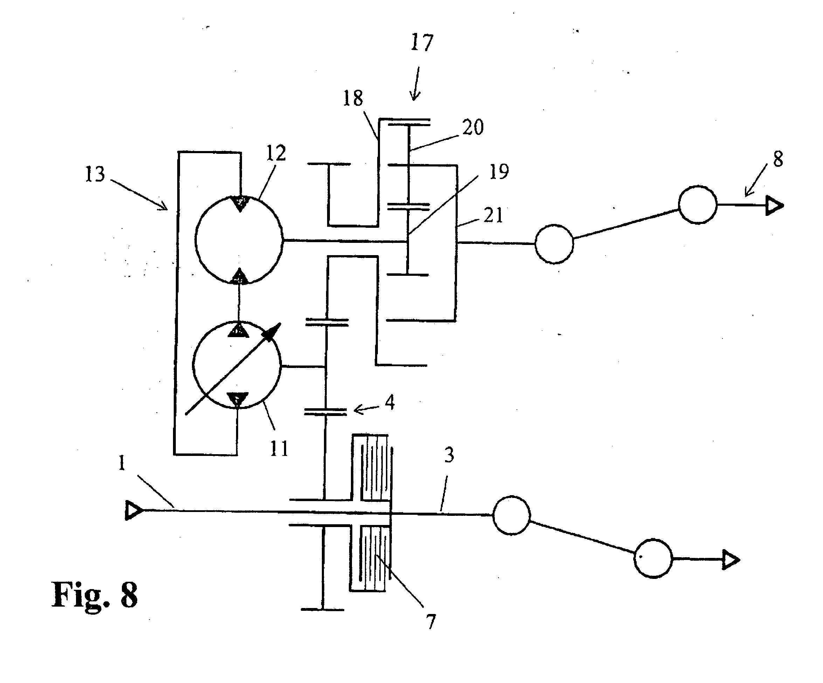

**Figur 8** zeigt eine weitere alternative Ausführung der Erfindung, bei welcher nur die Drehzahl des Nebenabtriebes 8 unter Nutzung des Überlagerungsgetriebes 17 stufenlos an die geforderten Betriebsbedingungen angepasst werden kann. Diese Alternative ist von Vorteil, wenn die am Nebenabtrieb erforderliche Leistung auch bei geringer Drehzahl der Eingangswelle 1 bereit gestellt werden soll. Die Fahrzeuggeschwindigkeit wird in dieser Ausführung über die Drehzahl der Eingangswelle 1 und die gewählte Gangstufe im Fahrantrieb bestimmt. Die Drehzahl am Nebenabtrieb 8 wird über das Überlagerungsgetriebe an die jeweiligen Anforderungen optimal angepasst.

Die mit dieser Erfindung hauptsächlich erzielbaren Vorteile sind:

Es können bestehende Fahrzeugkonfigurationen übernommen werden und serienmäßig verfügbare Getriebe und Getriebekomponenten bleiben in Verwendung.
- Bei deaktivem Nebenabtrieb 8 zum Nebenaggregat wird die gesamte Antriebsleistung auf direktem Weg zum Fahrzeugantrieb abgeleitet.
- Die Drehzahl der Abtriebswellen 3 zum Fahrzeugantrieb kann innerhalb der Drehzahl- und Leistungsgrenzen des Variatorsystems 13 stufenlos an die geforderten Bedingungen angepasst werden. Dadurch wird es möglich, die Fahrzeuggeschwindigkeit ohne schleifende Kupplungen zu beeinflussen.
- Der Verbrennungsmotor kann entsprechend den Anforderungen der Nebenverbraucher oder der Leistungsanforderungen im Fahrantrieb in den optimalen Drehzahl- und/oder Leistungsbereichen betrieben werden.
- Der Gesamtwirkungsgrad ist sehr gut, auch bei Betrieb des Fahrzeugantriebs oder des Antriebs zu den Nebenverbrauchern über die Verzweigungsgetriebe durch die geringe Leistungsübertragung über das Variatorsystem 13. Damit verbunden können die hydrostatischen, elektrischen oder mechanischen Variatorkomponenten klein dimensioniert werden.
- Die Drehzahl der Abtriebswelle 3 kann gegenüber der Drehzahl der Eingangswelle 1 erhöht werden, wodurch bei definiertem Eingangsmoment an der Welle 1 das Moment an der Welle 3 reduziert wird und im nachgeschalteten Getriebe zum Fahrzeugantrieb höhere Leistungen als bei einer direkten Verbindung mit dem Verbrennungsmotor übertragen werden können.
- Die bei Schaltvorgängen auftretenden Stufensprünge bei Synchrosplit- oder Automatikgetrieben, welche Drehzahlschwankungen an der Getriebeeingangswelle unvermeidbar machen, können durch Verwendung des Überlagerungsgetriebes 17 mit entsprechender Steuerung im Variator weitgehend kompensiert werden, wodurch am Verbrennungsmotor eine nur sehr geringe Drehzahlvariabilität verursacht wird und der Verbrennungsmotor während des gesamten Beschleunigungs- oder Verzögerungsvorganges in optimalen Betriebsbereichen gehalten werden kann.

## Patentansprüche

1. Einrichtung für ein Getriebe, umfassend eine Eingangswelle (1), eine erste Abtriebswelle (3), eine zweite Abtriebswelle, sowie einen Summierplanetensatz (17) und eine Variatoreinheit (13) oder an deren Stelle eine Hydropumpe (28), und diese untereinander sowie mit der Eingangswelle (1) und den Abtriebswellen (3) in Wirkverbindung bringenden Bauteilen zur stufenlosen Beeinflussung der Drehzahl einer der Abtriebswellen (3) bei konstanter Drehzahl der Eingangswelle (1), wobei die Einrichtung als vorgefertigtes Modul zwischen einer Verbrennungskraftmaschine, einem herkömmlichen Getriebe beliebiger Bauart eines Fahrzeugantriebes und einem Nebenabtrieb (8) derart einbaubar ist, dass das Modul über die Eingangswelle (1) mit der Verbrennungskraftmaschine, über die erste Abtriebswelle (3) mit dem Getriebe und über die zweite Abtriebswelle mit dem Nebenabtrieb (8) verbindbar ist, wobei die Einrichtung Mittel zur Aufteilung der Antriebsleistung der Verbrennungskraftmaschine auf den Fahrzeugantrieb und den Nebenabtrieb aufweist und wobei die Drehzahl des Fahrantriebs oder die Drehzahl des Nebenabtriebs durch die Einrichtung stufenlos einstellbar ist, **dadurch gekennzeichnet, dass** der Drehimpuls der Eingangswelle (1) über eine Stirnradstufe (16; 4) an ein Hohlrad (18) des Summierplanetensatzes (17) und von diesem Hohlrad (18) über Planetenräder (20) an einen Planetenträger (21) übertragen wird, der in Wirkverbindung mit der ersten Abtriebswelle (3) oder der zweiten Abtriebswelle steht, dass die Drehzahl der ersten Abtriebswelle (3) oder der zweiten Abtriebswelle über die Variatoreinheit (13) oder die Hydropumpe (28), welche mit einem Sonnenrad (19) des Summierplanetensatzes (17) in Wirkverbindung steht, mit hydrostatisch-mechanischer oder elektrisch-mechanischer Leistungsverzweigung stufenlos und unabhängig von der Drehzahl der Eingangswelle (1) einstellbar ist, dass die Eingangswelle (1) über eine oder mehrere Stirnradstufen (4) und eine lösbare Kupplung (7) mit der zweiten Abtriebswelle verbunden ist, und dass der Nebenabtrieb (8) bei geschlossener Kupplung (7) aktivierbar ist.

2. Einrichtung nach Anspruch 1, **dadurch gekennzeichnet, dass** die Eingangswelle (1) über mehrere Stirnradstufen (4) und die lösbare Kupplung (7) mit der zweiten Abtriebswelle verbunden ist.

3. Einrichtung nach Anspruch 1 oder 2, **dadurch gekennzeichnet, dass** die Variatoreinheit (13) über eine Verbindung (14) mit dem Sonnenrad (19) des Summierplanetensatzes (17) lösbar verbunden ist.

4. Einrichtung nach Anspruch 1 oder 2, **dadurch gekennzeichnet, dass** zwischen der Variatoreinheit (13) oder der Hydropumpe (28) und dem Sonnenrad (19) des Summierplanetensatzes (17) eine lösbare Bremse (27) vorgesehen ist.

5. Einrichtung nach einem der Ansprüche 1 bis 4, **dadurch gekennzeichnet, dass** eine Synchronisiereinrichtung (2) zwischen der Eingangswelle (1) und der ersten Abtriebswelle (3) vorhanden ist und bei geschlossener Synchronisiereinrichtung (2) ein direkter Durchtrieb von der Eingangswelle (1) zur ersten Abtriebswelle (3) erfolgt, wobei die Komponenten des Summierplanetensatzes (17) ohne Last rotieren.

6. Einrichtung nach Anspruch 5, **dadurch gekennzeichnet, dass** der Drehimpuls von der Eingangswelle (1) bei geöffneter Synchronisierungseinrichtung (2) über den Summierplanetensatz (17) zur ersten (3) oder zweiten Abtriebswelle geleitet wird.

7. Einrichtung nach einem der Ansprüche 1 bis 6, **dadurch gekennzeichnet, dass** die Variatoreinheit (13) aus einer Hydraulikpumpe (11), einem Hydromotor (12) und hydraulischen Verbindungen zwischen diesen Bauteilen, oder aus alternativen elektrischen Komponenten, sowie einer Variatoreingangswelle und einer Variatorausgangswelle besteht.

8. Einrichtung nach Anspruch 7, **dadurch gekennzeichnet, dass** die Variatoreingangswelle zur Hydraulikpumpe (11) der Variatoreinheit (13) über eine Stirnradstufe mit der zweiten Abtriebswelle verbunden ist und nur bei geschlossener Kupplung (7) die Hydraulikpumpe (11) aktiviert ist.

9. Einrichtung nach Anspruch 7, **dadurch gekennzeichnet, dass** die Variatoreingangswelle zur Hydraulikpumpe (11) der Variatoreinheit (13) in einer Stirnradstufe zwischen der Eingangswelle (1) und der Kupplung (7) vorgesehen ist und unabhängig von der Stellung der Kupplung (7) aktiviert ist.

10. Einrichtung nach Anspruch 1, 2 oder 4, oder nach Anspruch 5 oder 6, wenn abhängig von einem der Ansprüche 1, 2 oder 4, **dadurch gekennzeichnet, dass** die Hydropumpe (28) gegen eine regelbare Drossel (29) arbeitet, wobei die Regelstellung der Drossel (29) die Drehzahl der ersten Abtriebswelle (3) bestimmt.

11. Einrichtung nach Anspruch 5, **dadurch gekennzeichnet, dass** die Übersetzungen im Summierplanetensatz (17) und in der mit dem Summierplanetensatz (17) verbundenen Stimradstufe (16) und in einer weiteren mit dem Summierplanetensatz (17) verbundenen Stirnradstufe (24) so gewählt sind, dass die Umschaltung vom direkten Durchtrieb von Eingangswelle (1) zur ersten Abtriebswelle (3) beim leistungsverzweigten Betrieb ohne Unterbrechung der Leistungsübertragung in Synchronpunkten erfolgt.

12. Einrichtung nach Anspruch 5, wenn abhängig von einem der Ansprüche 1,2 oder 4, **dadurch gekennzeichnet, dass** die Übersetzungen in einer mit dem Summierplanetensatz (17) verbundenen Stirnradstufe (16) und in einer weiteren mit dem Summierplanetensatz (17) verbundenen Stirnradstufe (24), sowie im Summierplanetensatz (17) so gewählt sind, dass bei geschlossener Synchronisiereinrichtung (2) die Drehzahl am Sonnenrad (19) und somit an der Hydropumpe (28) nahe Null ist.

## Claims

1. A device for a transmission, comprising an input shaft (1), a first output shaft (3), a second output shaft, and a summing planetary gear set (17) and a variator unit (13) or, instead of said unit, a hydro pump (28), and components that bring them into operative connection with each other and with an input shaft (1) and the output shafts (3) for influencing in a continuously variable manner the speed of one of the output shafts (3) at constant speed of the input shaft (1), wherein the device can be installed as a prefabricated module between an internal combustion engine, a conventional transmission of any configuration of a vehicle drive and a power take-off (8) in such a way that the module is connectible via the input shaft (1) to the internal combustion engine, via the first output shaft (3) to the transmission and via the second output shaft to the power take-off (8), wherein the device comprises means for splitting the drive power of the internal combustion engine among the vehicle drive and the power take-off, and wherein the speed of the travel drive or the speed of the power take-off is adjustable in a continuously variable manner by the device, **characterized in that** the angular momentum of the input shaft (1) is transferred via a spur gear stage (16; 4) to a ring gear (18) of the summing planetary gear set (17), and from said ring gear (18) via planet wheels (20) to a planet carrier (21) which is in operative connection with the first output shaft (3) or the second output shaft, the speed of the first output shaft (3) or the second output shaft is adjustable via the variator unit (13) or the hydro pump (28), which is in operative connection with a sun wheel (19) of the summing planetary gear set (17), with hydrostatic-mechanical or electricalmechanical torque splitting in a continuously variable manner and independently of the speed of the input shaft (1), the input shaft (1) is connected via one or several spur gear stages (4) and an engaging and disengaging clutch (7) to the second output shaft, and the power take-off (8) can be activated when the clutch (7) is engaged.

2. A device according to claim 1, **characterized in that** the input shaft (1) is connected via several spur gear stages (4) and the clutch (7) to the second output shaft.

3. A device according to claim 1 or 2, **characterized in that** the variator unit (13) is detachably connected via a connection (14) to the sun wheel (19) of the summing planetary gear set (17).

4. A device according to claim 1 or 2, **characterized in that** a releasable brake (27) is provided between the variator unit (13) or the hydro pump (28) and the sun wheel (19) of the summing planetary gear set (17).

5. A device according to one of the claims 1 to 4, **characterized in that** a synchronizing device (2) is present between the input shaft (1) and the first output shaft (3), and a direct power take-off occurs from the input shaft (1) to the first output shaft (3) when the synchronizing device (2) is closed, wherein the components of the summing planetary gear set (17) revolve without load.

6. A device according to claim 5, **characterized in that** the angular momentum is conducted from the input shaft (1) via the summing planetary gear set (17) to the first (3) or second output shaft when the synchronizing device (2) is open.

7. A device according to one of the claims 1 to 6, **characterized in that** the variator unit (13) consists of a hydraulic pump (11), a hydraulic motor (12) and hydraulic connections between these components, or of alternative electrical components, and a variator input shaft and a variator output shaft.

8. A device according to claim 7, **characterized in that** the variator input shaft to the hydraulic pump (11) of the variator unit (13) is connected to the second output shaft via a spur gear stage, and the hydraulic pump (11) is only activated when the clutch (7) is engaged.

9. A device according to claim 7, **characterized in that** the variator input shaft to the hydraulic pump (11) of the variator unit (13) is provided in a spur gear stage between the input shaft (1) and the clutch (7) and is activated independently of the position of the clutch (7).

10. A device according to claim 1, 2 or 4, or according to claim 5 or 6 if dependent on one of the claims 1, 2 or 4, **characterized in that** the hydro pump (28) operates against a controllable throttle (29), wherein the control position of the throttle (29) determines the speed of the first output shaft (3).

11. A device according to claim 5, **characterized in that** the gear ratios in the summing planetary gear set (17) and in spur gear stage (16) connected to the summing planetary gear set (17) and in a further spur gear stage (24) connected to the summing planetary gear set (17) are chosen in such a way that the transfer from direct power take-off from input shaft (1) to first output shaft (3) in power-splitting operation occurs without interruption of power transmission in the synchronous points.

12. A device according to claim 5, if dependent on one of the claims 1, 2 or 4, **characterized in that** the gear ratios are chosen in a spur gear stage (16) connected to the summing planetary gear set (17) and in a further spur gear stage (24) connected to the summing planetary gear set (17) and in the summing planetary gear set (17) in such a way that when the synchronizing device (2) is closed the speed on the sun wheel (19) and therefore on the hydro pump (28) is close to zero.

## Revendications

1. Dispositif pour une boîte de vitesses, comprenant un arbre d'entrée (1), un premier arbre d'entraînement (3), un deuxième arbre d'entraînement, ainsi qu'un train planétaire intégrateur (17) et une unité de variateur (13) ou une pompe hydraulique (28) à la place de celle-ci, et des composants mettant ceux-ci en liaison active les uns avec les autres et avec l'arbre d'entrée (1) et les arbres d'entraînement (3) en vue d'influencer sans paliers la vitesse de rotation de l'un des arbres d'entraînement (3) à une vitesse de rotation constante de l'arbre d'entrée (1), le dispositif pouvant être monté sous la forme d'un module préfabriqué entre un moteur à combustion interne, une boîte de vitesses ordinaire d'un type quelconque d'un groupe de propulsion de véhicule et un entraînement secondaire (8), de telle manière que le module puisse être relié par l'intermédiaire de l'arbre d'entrée (1) avec le moteur à combustion interne, du premier arbre d'entraînement (3) avec la boîte de vitesses et par l'intermédiaire du deuxième arbre d'entraînement avec l'entraînement secondaire (8), le dispositif comportant des moyens pour distribuer la puissance d'entraînement du moteur à combustion interne à la propulsion du véhicule et à l'entraînement secondaire et la vitesse de rotation de l'entraînement de propulsion ou la vitesse de rotation de l'entraînement secondaire pouvant être réglées sans paliers avec le dispositif, **caractérisé en ce que** l'impulsion de rotation de l'arbre d'entrée (1) est transmise par un étage de roues droites (16 ; 4) à une roue creuse (18) du train planétaire intégrateur (17) et de cette roue creuse (18), par l'intermédiaire de pignons planétaires (20), à une porte-pignons (21) qui est en liaison active avec le premier arbre d'entraînement (3) ou le deuxième arbre d'entraînement, **en ce que** la vitesse de rotation du premier arbre d'entraînement (3) ou du deuxième arbre d'entraînement peut être réglée avec l'unité de variateur (13) ou la pompe hydraulique (28), qui est en liaison active avec une roue solaire (19) du train planétaire intégrateur (17), avec une division hydrostatique et mécanique ou électrique et mécanique de la puissance, sans paliers et indépendamment de la vitesse de rotation de l'arbre d'entrée (1), **en ce que** l'arbre d'entrée (1) est reliée par l'intermédiaire d'un ou plusieurs étages de roues droites (4) et d'un accouplement débrayable (7) au deuxième arbre d'entraînement et **en ce que** l'entraînement secondaire (8) peut être activé quand l'accouplement est embrayé (7).

2. Dispositif selon la revendication 1, **caractérisé en ce que** l'arbre d'entrée (1) est relié par plusieurs étages de roues droites (4) et par l'accouplement débrayable (7) au deuxième arbre d'entraînement.

3. Dispositif selon la revendication 1 ou 2, **caractérisé en ce que** l'unité de variateur (13) est reliée d'une façon pouvant être défaite à la roue solaire (19) du train planétaire intégrateur (17) par une liaison (19).

4. Dispositif selon la revendication 1 ou 2, **caractérisé en ce qu'**il est prévu entre l'unité de variateur (13) ou la pompe hydraulique (28) et la roue solaire (19) du train planétaire intégrateur (17) un frein desserrable (27).

5. Dispositif selon l'une des revendications 1 à 4, **caractérisé en ce qu'**un dispositif de synchronisation (2) est présent entre l'arbre d'entrée (1) et le premier arbre d'entraînement (3) et, lorsque le dispositif de synchronisation (2) est fermé, une transmission directe s'effectue de l'arbre d'entrée (1) au premier arbre d'entraînement (3), auquel cas les composants du train planétaire intégrateur (17) tournent à vide.

6. Dispositif selon la revendication 5, **caractérisé en ce que** l'impulsion de rotation de l'arbre d'entrée (1) est acheminée, lorsque le dispositif de synchronisation (2) est ouvert, vers le premier (3) ou le deuxième arbre d'entraînement en passant par le train planétaire intégrateur (17).

7. Dispositif selon l'une des revendications 1 à 6, **caractérisé en ce que** l'unité de variateur (13) se compose d'une pompe hydraulique (11), d'un moteur hydraulique (12) et de liaisons hydrauliques entre ces composants, ou de composants électriques alternatifs ainsi que d'un arbre d'entrée de variateur et d'un arbre d'entraînement de variateur.

8. Dispositif selon la revendication 7, **caractérisé en ce que** l'arbre d'entrée du variateur vers la pompe hydraulique (11) de l'unité de variateur (13) est relié par un étage de roues droites au deuxième arbre d'entraînement et la pompe hydraulique (11) n'est activée que lorsque l'accouplement (7) est fermé.

9. Dispositif selon la revendication 7, **caractérisé en ce que** l'arbre d'entrée du variateur avers la pompe hydraulique (11) de l'unité de variateur (13) est prévu dans un étage de roues droites entre l'arbre d'entrée (1) et l'accouplement (7) et activé indépendamment de la position de l'accouplement (7).

10. Dispositif selon la revendication 1, 2 ou 4 ou selon la revendication 5 ou 6 si elle est dépendante de l'une des revendications 1, 2 ou 4, **caractérisé en ce que** la pompe hydraulique (28) fonctionne contre un étranglement réglable (29), la position de réglage de l'étranglement (29) déterminant la vitesse de rotation du premier arbre d'entraînement (3).

11. Dispositif selon la revendication 5, **caractérisé en ce que** les rapports de multiplication dans le train planétaire intégrateur (17) et dans l'étage de roues droites (16) relié au train planétaire intégrateur (17) et dans un autre étage de roues droites (24) relié au train planétaire intégrateur (17) sont choisis de telle manière que la commutation de la transmission directe de l'arbre d'entrée (1) au premier arbre d'entraînement (3) vers le fonctionnement avec division de la puissance s'effectue sans interruption de la transmission de puissance à des points synchrones.

12. Dispositif selon la revendication 5, si elle est dépendante de l'une des revendications 1, 2 ou 4, **caractérisé en ce que** les rapports de transmission dans un étage de roues droites (16) relié au train planétaire intégrateur (17) et dans un autre étage de roues droites (24) relié au train planétaire intégrateur (17), ainsi que dans le train planétaire intégrateur (17), sont choisis de telle manière que lorsque le dispositif de synchronisation (2) est fermé, la vitesse de rotation au niveau de la roue solaire (19) et ainsi de la pompe hydraulique (28) soit proche de zéro.
